# EUROPEAN PATENT SPECIFICATION

(11) **EP 0 725 381 B1**
(45) Date of publication and mention of the grant of the patent: **13.06.2001**
(21) Application number: 96101445.3
(22) Date of filing: 01.02.1996
(51) Int. Cl.: G10H 1/00, G10H 1/10

(54) **Harmony chorus apparatus generating chorus sound derived from vocal sound**
Vorrichtung zur Erzeugung eines harmonischen Chors aus einem Vokalklang
Dispositif générateur de choeur harmonisé à partir d'un son vocal

(30) Priority: 02.02.1995 JP 1618195
(43) Date of publication of application: 07.08.1996
(73) Proprietor: YAMAHA CORPORATION, Hamamatsu-shi, Shizuoka-ken 430 (JP)
(72) Inventor: Yoshida, Masao, c/o Yamaha Corporation, Hamamatsu-shi, Shizuoka-ken 430 (JP); Nagata, Yuichi, c/o Yamaha Corporation, Hamamatsu-shi, Shizuoka-ken 430 (JP); Kuroiwa, Kiyoto, c/o Yamaha Corporation, Hamamatsu-shi, Shizuoka-ken 430 (JP); Suzuki, Satoshi, c/o Yamaha Corporation, Hamamatsu-shi, Shizuoka-ken 430 (JP); Kitano, Mikio, c/o Yamaha Corporation, Hamamatsu-shi, Shizuoka-ken 430 (JP)
(74) Representative: Geyer, Ulrich F., Dr. Dipl.-Phys.

(56) References cited:
- EP-A- 0 501 483
- EP-A- 0 509 812
- WO-A-88/05200
- US-A- 5 296 643

## Description

### BACKGROUND OF THE INVENTION

The present invention relates to a harmony chorus apparatus or harmonizing effector which can be utilized suitably for a network karaoke system, for example.

Nowadays, the karaoke system has become so popular, and users demand a wide variety of entry song titles available by the karaoke system. A so-called network karaoke system has been developed in which song data is downloaded from a host computer having a data base of huge numbers of songs to retailers such as karaoke parlors through telecommunication.

In the prior art, there is known a karaoke system in which a harmony voice musically harmonizing with a user's singing voice is automatically added to a vocal sound of the singing voice. Such a system generates a chorus sound having a fixed pitch, for example, shifted three degrees relative to the singing voice picked up by a microphone. Harmonization is effected by mixing the harmony voice with the original singing voice.

Generally, the pitch of a note harmonizing with another note varies depending on a key or scale of the song. The pitch of a harmony voice for a certain note in A minor is different from that in C major, for example. A suitable harmony pitch is different in one case to another. For instance, either of minor third or major third may be selected adequately to achieve favorable harmonization. Further, from a musical point of view, it is possible to shift the pitch of the harmony voice upper and lower relative to a main melody according to progression of a song in order to introduce variations into harmony structure of the song. Thus, a simple and uniform shift of the harmony voice from the original voice at a fixed pitch, which is done in the prior art, is not enough to obtain a comfortable harmony voice. Such a harmonizing effect may be monotonous.

EP-A-0 501 483 discloses memory means converting to data form and storing the chorus patterns obtained by breaking down and organizing the backing chorus for a particular piece of music into appropriate segments. Thus, when reproducing a piece of music created in accordance with the MIDI standard, all the chorus data corresponding to that piece of music can read from said memory means and synchronized with the music reproduction data, after which appropriate chorus patterns can be selected one by one and mixed into the music. Thus, it is possible to obtain the reproduction of original sounds from music data created in accordance with the MIDI standard and also the reproduction of a natural background chorus sound created from data based not on the MIDI standard but obtained directly from natural human voices.

### SUMMARY OF THE INVENTION

The purpose of the present invention is to provide a harmonizing effector, which can add a harmony voice or chorus sound having a pitch difference varying relative to the original voice in response to progression of the song, and which can achieve a harmonizing effect comfortable and rich in variety.

In order to achieve the object described above, according to the present invention, a harmony chorus apparatus collects an original of a vocal sound performed after a main melody pattern of a song, and adds a chorus sound derived after a chorus melody pattern of the same song to the vocal sound. The apparatus comprises a memory that stores a main melody data representative of the main melody pattern and a chorus melody data representative of the chorus melody pattern which is designed in harmony with the main melody pattern, a pitch difference calculator that sequentially retrieves the main melody data and the chorus memory data from the memory in synchronization with progression of the song, and that calculates a pitch difference between the main melody pattern and the chorus memory pattern according to the retrieved main melody data and the chorus melody data, a chorus generator that shifts a pitch of the collected vocal sound by the calculated pitch difference to generate the chorus sound in the form of a variation of the vocal sound, and a mixing device that mixes the generated variation of the vocal sound and the collected original of the vocal sound with each other to thereby create a harmony of the song.

In a specific form, the harmony chorus further comprises a chorus tone controller that varies frequency characteristics of the generated chorus sound according to the calculated pitch difference to thereby improve a tone of the chorus sound.

In another specific form, the harmony chorus apparatus further comprises a chorus volume controller that regulates a volume of the generated chorus sound according to the calculated pitch difference so that the volume is made smaller as the pitch difference becomes greater.

According to the present invention, the memory stores the main melody data representing the main melody pattern of the song, as well as the chorus melody data representing the chorus melody pattern corresponding to the main melody pattern. The pitch difference calculator reads out the main melody data and the chorus melody data from the memory in synchronism with the progression of the song, and calculates the pitch difference between the main melody pattern and the chorus melody pattern based on both of the retrieved data. The chorus generator generates the chorus sound by shifting the pitch of the collected vocal sound in response to the calculated pitch difference. The mixing device reproduces the generated chorus sound together with the original vocal sound. Thus, the chorus sound having the pitch tracking the chorus melody pattern corresponding to the main melody pattern of the song is mixed to the vocal sound. Further, according to the present invention, the tone of the chorus sound to be added can be modified in response to the pitch difference between the vocal sound and the chorus sound. Still further, according to the present invention, the volume of the chorus sound can be controlled smaller as the pitch difference between the vocal sound and the chorus sound becomes greater.

### BRIEF DESCRIPTION OF THE DRAWINGS

Figure 1 is a schematic block diagram showing an arrangement of a harmonizing effector according to an embodiment of the present invention.

Figure 2 is a schematic block diagram showing a structure of a reverberation effector provided in the embodiment of the present invention.

Figure 3 is a schematic block diagram showing a different structure of the reverberation effector in the embodiment of the present invention.

Figure 4 is a schematic block diagram showing another different structure of the reverberation effector in the embodiment of the present invention.

Figure 5 is a schematic block diagram showing a further different structure of the reverberation effector in the embodiment of the present invention.

Figure 6 is a schematic block diagram showing a still further different structure of the reverberation effector in the embodiment of the present invention.

Figure 7 is a schematic block diagram showing a variation of the embodiment in which equalizers are provided in association with respective chorus melody outputs of a pitch shifter.

Figure 8 is a schematic block diagram showing another variation of the embodiment in which attenuators are provided in association with respective chorus melody outputs of the pitch shifter.

### DETAILED DESCRIPTION OF THE INVENTION

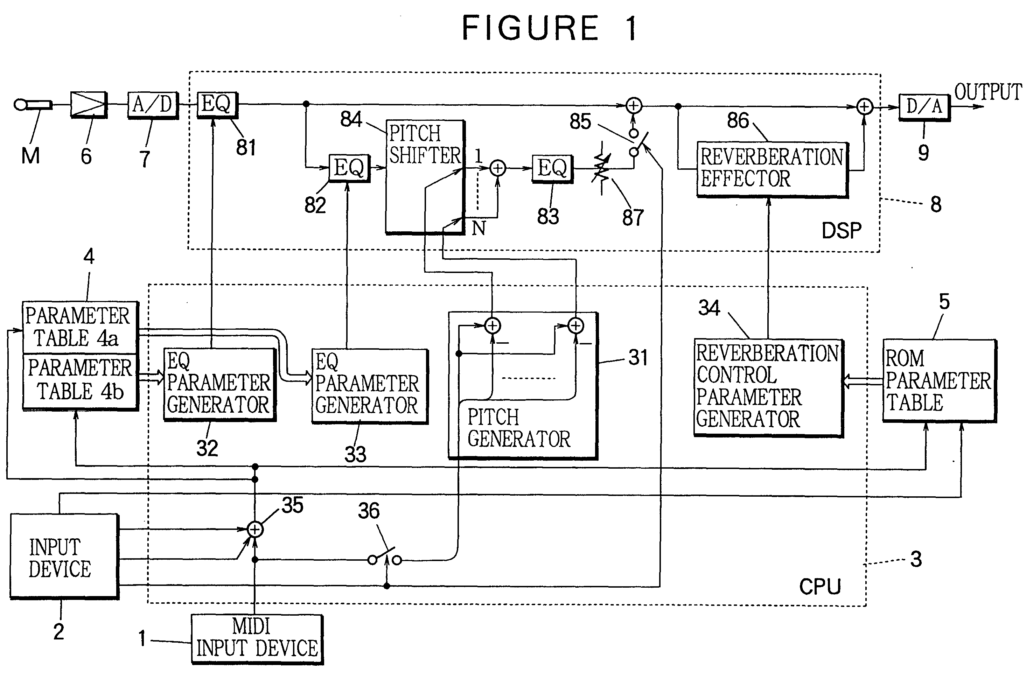

Figure 1 shows a preferred embodiment of the chorus harmony apparatus or harmonizing effector according to the present invention. The apparatus may be employed in an online network karaoke system which receives song data in MIDI format from a host computer via communication network, which stores the song data in a hard disk or CD-ROM, and which reproduces a requested song by reading out the stored song data.

In Figure 1, the apparatus comprises a MIDI input device 1 to accept MIDI song data from external memory media (not shown) such as a hard disk, a manual input device 2 to interface with users, a CPU (Central Processing Unit) 3 to control each device and to compute control parameters, ROMs (Read Only Memory) 4 and 5 storing tables of control parameters, an amplifier 6 to amplify a vocal sound picked up by a microphone M, an A/D (Analog/Digital) converter 7 to convert an analog signal of the amplified vocal sound into a digital signal, a DSP (Digital Signal Processor) 8 to carry out a variety of signal processing for the digitally converted vocal signal, and a D/A (Digital/Analog) converter 9 to convert the processed digital signal into an analog signal and to feed it to an external sound system (not shown).

The external memory medium such as the hard disk stores the song data of each entry karaoke song, including a main melody data representative of a main melody pattern, an accompaniment data used to reproduce an accompanying instrumental sound, and a chorus melody data representative of a monophonic or polyphonic chorus pattern corresponding to the main melody pattern. The song data is transmitted from the host computer. Each song data further contains mode information as a music genre data (e.g., pops, jazz, ballad etc.) of the song, and a select data effective to select either of a harmony mode accompanied with the chorus sound or a normal mode without the chorus sound. In the reproduction of the karaoke accompaniment, the accompaniment data is fed to a sound source (not shown) to reproduce the karaoke accompaniment. At the same time, the main melody data, the chorus melody data and the mode information are fed to the CPU 3, while being converted from MIDI domain to TTL domain.

The input device 2 is accommodated in the apparatus, or provided as a remote controller. The input device 2 accepts user's manual input commands, and outputs control information in response to the commands to the CPU 3. The user inputs various data including male/female discrimination, delay time/repeat gain of reverberation to be added to the vocal sound and so on, in addition to the mode information. The input device 2 is used to control parameters which should be adjusted according to preference of the user, tone or volume of the voice, performance of EQ (equalizer), and echo level (repeat gain) or delay time of an effector. These parameters are preset for individual users in a memory, and are read out from the memory. The mode information can be inputted from either of the MIDI input device 1 and the manual input device 2 by selecting 'automatic input' or 'manual input' alternatively. Thus, if 'automatic input' is selected by the operation of the device 2, the mode information provided through the MIDI input device 1 is adopted. On the other hand, if 'manual input' is selected, the mode information provided through the manual input device 2 is adopted.

The CPU 3 executes predetermined control programs to carry out prescribed functions as achieved by the following blocks 31 to 36. A pitch generator 31 calculates a pitch difference between the main melody pattern and the chorus melody pattern. The obtained value of the pitch shift (pitch difference) is inputted to the DSP 8. An EQ (equalizer) parameter generator 32 sets filtering factors of an input equalizer 81 contained in the DSP 8 according to control parameters read out from a parameter table 4b of the ROM 4 in response to the mode information. Another EQ parameter generator 33 sets up filtering factors of a chorus input equalizer 82 contained in the DSP 8 according to control parameters which are read out from another parameter table 4a of the ROM 4 in response to attribute information. The EQ parameter generator 33 further sets up filtering factors of an output equalizer 83 and a volume of a chorus level controller 87. A reverberation control parameter generator 34 sets filtering factors of a reverberation effector 86 contained in the DSP 8 according to control parameters which are read out from a parameter table stored in the ROM 5 in response to the mode information and the input values of delay time and repeat gain. An automatic/manual selector 35 is actuated to take the mode information and attribute information from the manual input device 2 when 'manual input' is selected by the operation of the device 2. Then, the mode and attribute information is fed to the ROMs 4 and 5 to specify filter and reverberation parameter data in the tables of the ROMs 4 and 5. On the other hand, if 'automatic input' is selected, the automatic/manual selector 35 is switched to take the mode and attribute information from the MIDI input device 1. Then, the mode and attribute information is fed to the ROMs 4 and 5 to specify filter and reverberation parameter data in the parameter tables of the ROMs 4 and 5. A mode selector 36 is turned on if the harmony mode is selected by the operation of the input device 2. Consequently, the main melody data and the chorus melody data are distributed from the MIDI input device 1 to the pitch generator 31. On the other hand, if the normal mode is selected, the mode selector 36 is turned off. Consequently, the data is not supplied to the pitch generator 31.

As described above, the parameter tables 4a and 4b are allocated in the ROM 4, and the tables store the control parameters to be set in the input equalizer 81 and the chorus input equalizer 82 of the DSP 8. According to the attribute information such as male/female identification and personal preference, the parameter table 4a specifies filtering factors to be set in the equalizer 82 such as filter cutoff frequencies, frequencies dominating equalizer characteristics, gain, and Q value. The table 4a is also accessed to specify the chorus output level of the chorus level controller 87. The other parameter table 4b is accessed in similar manner to specify control factors to be set in the input equalizer 81 according to the mode information such as a reproduction mode, the genre of the song and so on. The ROM 5 stores the parameter table used to set control factors in the reverberation effector 86 accommodated in the DSP 8. The parameter table stores control parameters such as echo level, delay time, repeat gain etc., which are set in the reverberation effector 86 according to the mode information described above.

The DSP 8 is comprised of the input equalizer 81, the chorus input equalizer 82, the chorus output equalizer 83, a pitch shifter 84, the chorus level controller 87, a mode selector switch 85, and the reverberation effector 86. The input equalizer 81 is comprised of a quadratic HPF (High Pass Filter), a linear LPF (Low Pass Filter), and threestaged equalizer units connected in series. The cutoff frequencies of the HPF and LPF and the filter factors of each equalizing unit (frequencies, gain, and Q) are set up by the EQ parameter generator 32 as described above. The chorus input equalizer 82 is comprised of a serial connection of a quadratic LSF (Low Shelving Filter), a quadratic HSF (High Shelving Filter), and a single equalizer unit. The cutoff frequencies of the LSF and HSF and the filter factors of the equalizing unit (frequencies, gain, and Q) are established by the EQ parameter generator 33 as described above. The pitch shifter 84 shifts the pitch of the output of the equalizer 82 according to the pitch difference between the main melody and the chorus melody, calculated by the pitch generator 31. For the pitch shifter 84, it is possible to employ a conventional arrangement disclosed in JP-A-62-89095, for example. In this arrangement, a target frequency after the pitch shift is registered correspondingly to the pitch shift value for each note. In this embodiment, the conventional arrangement should be modified to a multiple input/output configuration in order to deal with multiple chorus melodies 1 to N in parallel manner. The chorus output equalizer 83 eliminates unnecessary frequency components such as a noise yielded by the pitch shift of the pitch shifter 84 in the chorus sound. The chorus level controller 87 adjusts the chorus sound level or volume when mixed to the singer's vocal sound. The mode selector switch 85 turns on and off in interlocking with the mode selector 36 of the CPU 3. The switch turns on in case that the reproduction of the sound is placed in the harmony mode, and turns off in the normal mode.

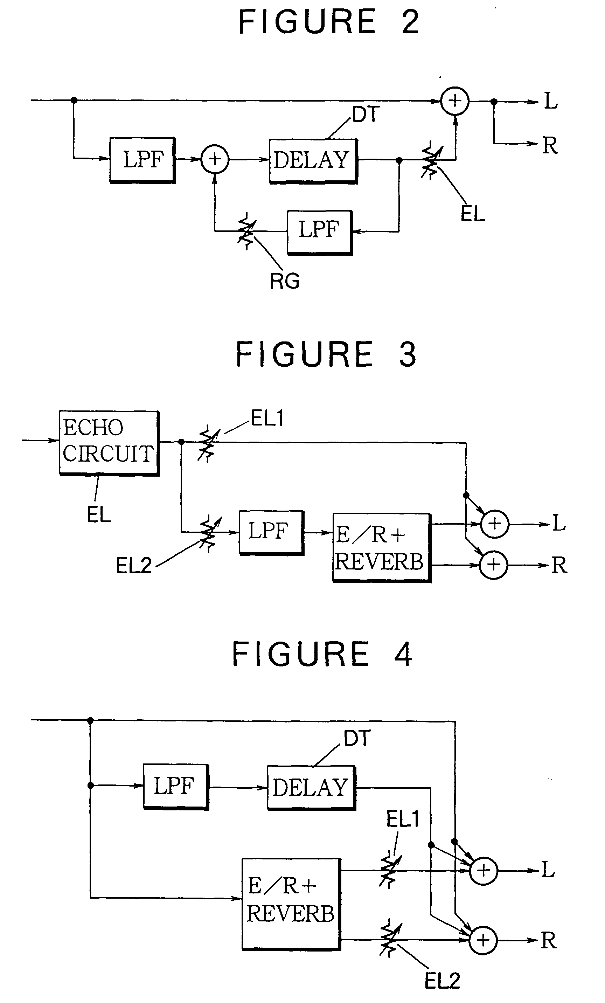

The reverberation effector 86 imparts various effects such as 'reverb', 'echo' and so on to the audio signal produced by mixing the chorus sound signal and the vocal sound signal. The reverberation effector 86 can adopt one of the structures shown in Figures 2 to 6. In the embodiment of Figure 2, an input audio signal is divided out and fed to a LPF, and is delayed by a delay circuit. Then, the filtered and delayed signal is added with the original signal, and is concurrently fed back to the input of the delay circuit in order to obtain a desired echo effect. In this embodiment, the echo level (EL in Figure 2), the repeat gain (RG in Figure 2), and the delay time (DT in Figure 2) are controlled according to the mode information.

In Figure 3, a reverb circuit is connected in series to the echo circuit of Figure 2 in order to obtain echo and reverb effect for the input audio signal. In addition to the echo level (EL in Figure 3) in the echo circuit, the echo levels EL1 and EL2 can be adjusted to control the whole effect in this embodiment.

In the embodiment of Figure 4, both of delay and reverb effects are added to the input audio signal in parallel. In Figure 4, the delay time (DT in Figure 4), the echo levels (EL1 and EL2 in Figure 4) for the left and right channels L and R can be adjusted.

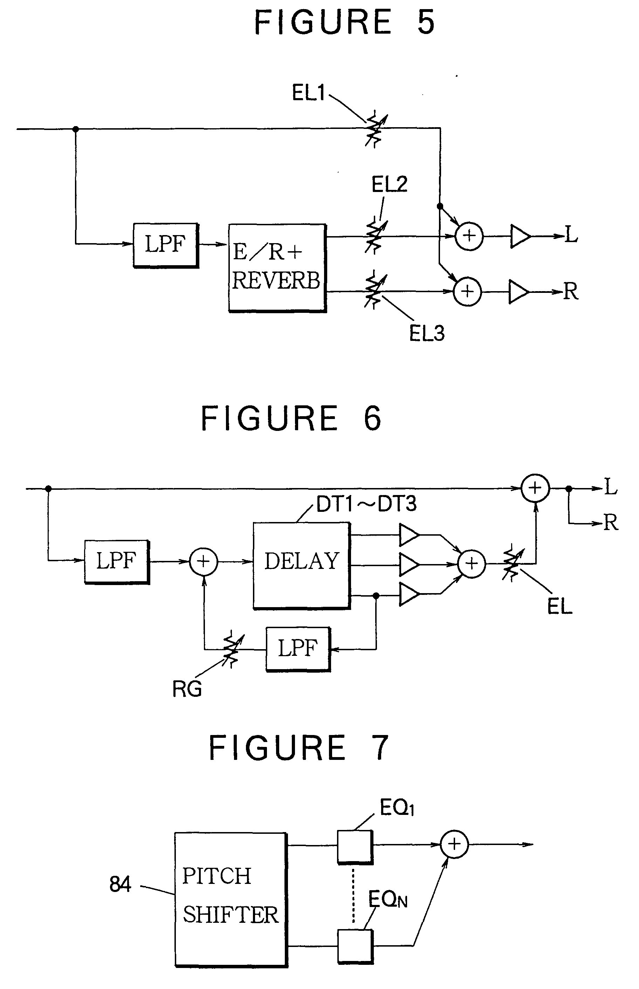

In Figure 5, only a reverb effect is added to the input audio signal. In this embodiment, the echo levels are adjusted for the input signal, and for the reverb output signals of the left and right channels (EL1 to EL3 in Figure 5).

In Figure 6, by adding a delay effect with different delay times to the input audio signal, a portion of the delay output is fed back to the input end to obtain the echo effect. In this embodiment, the repeat gain (RG in Figure 6), each delay time (DT1 to DT3 in Figure 6), and the echo level (EL in Figure 6) can be controlled.

The operation of the harmonizing effector according to the present invention will now be described hereunder. The description is given separately for two cases of the manual input mode in which the mode information is supplied through the input device 2, and the automatic input mode in which the mode information is entered together with the MIDI song data from the MIDI input device.

### (1) Manual input mode

When the user selects the manual input mode by the operation of the input device 2 upon poweron, the apparatus is turned into the manual input mode. In the manual input mode, the user is required to select either of the harmony mode or the normal mode, and to input the music genre of the song to be performed. The user inputs the attribute information such as male/female identification, personal preference, and reverb control data such as delay time, repeat gain etc. On commanding the start of performance by the input device 2, the song data to be reproduced is read out from the external memory medium and is received through the MIDI input device 1. The accompaniment data included in the song data is distributed to an accompaniment sound source (not shown), while the main melody data, the monophonic or polyphonic chorus melody data and the mode information are distributed to the CPU 3.

The CPU 3 can accept the mode information from both of the manual input device 2 and the MIDI input device 1. However, in this manual input mode, the mode information distributed from the manual input device 2 is selected by the automatic/manual selector 35, so that the control parameters are read out from the ROMs 4 and 5 according to the manually inputted mode information. The control parameters corresponding to the attribute information are also read out from the ROM 4, and the control parameters corresponding to the delay time and the repeat gain are read out from the ROM 5.

Now, the operations in the harmony mode and the normal mode, which are selected by the input device 2, are separately explained hereunder.

On selecting the harmony mode by the operation of the input device 2, the mode selector 36 is turned on, and the main melody data and the chorus melody data are supplied to the pitch generator 31. The pitch generator 31 calculates the value of the pitch difference between the main melody data and the chorus melody data, and distributes the value to the pitch shifter 84 in the DSP 8. Parameters corresponding to the harmony mode and the genre of the song are set up in the input equalizer 81, while parameters corresponding to the attribute information are set up in the chorus input equalizer 82. For the reverberation effector 86, parameters containing a delay time, a repeat gain, and an echo level is selected correspondingly to the harmony mode and the genre of the song. Further, parameters corresponding to the input delay time, repeat gain, and echo level are set up by reading them from the ROM 5. The voice signal of the original vocal sound created by the user is picked up through the microphone M, converted into a digital signal through the amplifier 6 and A/D converter 7, and fed to the DSP 8. In the DSP 8, the frequency characteristic of the voice is altered to create a tone suitable for the harmony mode and for the genre of the song by means of the input equalizer 81. The voice signal is divided into a direct vocal sound channel and a chorus sound channel. The chorus input equalizer 82 adjusts the tone of the voice signal divided into the chorus sound channel suitably according to the attribute information such as male/female identification and personal preference to performance of the karaoke song.

Then, the pitch of the output of the equalizer 82 is shifted according to the pitch difference between the main and chorus melody patterns by the pitch shifter 84, so that the chorus sound harmonizing with the vocal sound is produced. The multiple of the chorus sounds are mixed with each other, and are fed to the chorus output equalizer 83 to eliminate unnecessary frequency components such as noise. In this harmony mode, the mode selector switch 85 is turned on, so that the chorus sound signals are added to the original voice signal of the direct sound channel.

The reverberation effector 86 provides the mixture of the vocal sound signal and the chorus sound signal with the reverberation effect. In this harmony mode, the echo level is suppressed to avoid excessive reverberation because the chorus sound is already mixed to the vocal sound. Thus, the DSP 8 produces the final sound signal added with the chorus sound and the light reverberation. The signal is fed to the D/A converter 9 to convert the digital signal into an analog signal. Then, the analog signal is sent to the external sound system to be reproduced along with the karaoke accompaniment sound through a loudspeaker.

On the other hand, if the normal mode is selected by the input device 2, both of the mode selector 36 and the mode selector switch 85 are turned off. Thus, the chorus sound generation is stopped, so that the vocal signal collected by the microphone M is fed to the input equalizer 81 to adjust the tone suitable for the song genre, and is then added with the effect such as reverb and echo by the reverberation effector 86. The final signal is outputted to the external sound system to be reproduced without any chorus sounds. In this normal mode, a louder echo level and a longer delay time are selected for the operation of the reverberation effector 86, because no chorus sound is mixed to the vocal sound.

Now, the operation in the automatic input mode is described below.

If the automatic input mode is selected by the operation of the input device 2, the apparatus is turned into this mode. In the automatic input mode, mode information distributed from the MIDI input device 1 is selected by the automatic/manual selector 35. The parameters corresponding to the mode information are read out from the ROMs 4 and 5. In this mode, user's mode information inputted from the input device 2 is ignored. However, the user's input of attribute information such as male/female, delay time, repeat gain and else are accepted via the input device 2. Yet, it is possible to configure the apparatus to accept the mode information input through the manual input device 2 with a priority over the automatic information input only during the song performance. The operation in the automatic input mode is the same as in the abovedescribed manual input mode, except that the filter parameters for the equalizers 81 to 83 are set up according to the mode information inputted through the MIDI input device 1.

In the embodiment described above, the pitch of the vocal sound is shifted according to the monophonic or polyphonic chorus melody pattern arranged in conformity with the main melody pattern of the song to generate the chorus sound after the chorus melody pattern. Consequently, the monophonic or polyphonic line of the chorus melody can be added according to the mood and the progression of the song. The tone of the voice can be controlled according to the attribute information such as male/female difference and personal preference. Further, the suppression of the reverberation effects in the harmony mode enables to prevent excessive reverberation from being added to the vocal sound.

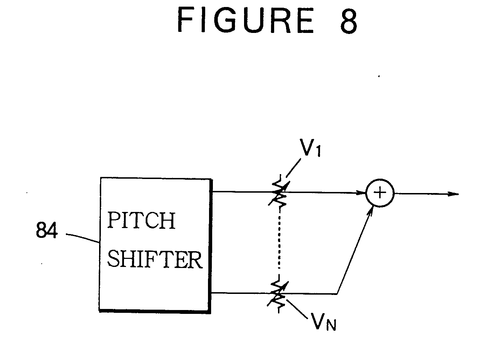

The present invention is not limited within the extent of the embodiment explained above, and can be modified as described below.
(1) As shown in Figure 7, it is possible to provide equalizers EQ₁ to EQ_{N} for each chorus sound output of the pitch shifter 84 in order to variably control the frequency characteristics according to the pitch shift amount of each chorus sound signal. In this arrangement, the output of the pitch generator 33 can be utilized as a control parameter corresponding to the pitch shift amount. Thus, the tone of each chorus line can be adjusted suitably for the pitch difference between the original vocal sound and the derived chorus sound. The comfortable harmonizing sound can be obtained.
(2) As shown in Figure 8, it is possible to provide attenuators V₁ to V_{N} for each chorus sound output of the pitch shifter 84 in order to control or regulate the volume dependently on the pitch shift amount of each chorus sound signal. Also in this arrangement, the output of the pitch generator 33 can be utilized as a control parameter representative of the pitch shift amount. In this arrangement, the greater the pitch difference between the main melody and the chorus melody, the smaller the volume of the harmonizing chorus sound, in order to prevent the chorus sound having a great pitch difference from emerging out too much. The arrangements shown in Figures 7 and 8 can be combined with each other.
(3) It is possible to configure the apparatus to return to the normal mode at the end of every song performance. MIDI song data contains control codes signifying top and end of a song. The end of the song can be detected by the code. In this arrangement, users do not have to specify the reproduction mode for each song performance, so that operation can be simplified in case that the harmony mode is not so frequently selected. If desired, other mode settings relating to music genre, for instance, can be automatically controlled in similar manner.
(4) If a chorus part is already included in the original karaoke song, the reproduction of the chorus part included in the song data can be turned on and off in association with the harmony or normal mode switching. Thus, overlapping of the separate chorus part and the chorus sound generated by the harmonizing effector of the embodiment can be avoided.
(5) The input equalizer 81 is controlled according to the mode information relating to the modes of the reproduction, music genre etc., while the chorus level controller 87 is controlled in response to the attribute information relating sex of the singer, personal deviations and so on in the disclosed embodiment. However, any of the equalizers or level controllers can be controlled according to the mode and attribute information in different manner.
(6) Further, the embodiment described above is assumed to be employed in the network karaoke system. However, the present invention can be applied to any types of the karaoke system. Further, the harmonizing chorus sound may be generated not only for the vocal sound signal picked up by the microphone, but also for a musical sound signal reproduced from a recording medium in synchronism with the song progression.

The present invention includes specific forms described below.
(1) The inventive harmony chorus apparatus includes an input device that inputs attribute information to characterize performance of the song, and a controller such as an equalizer and an attenuator that operates according to the inputted attribute information to modify a tone of either of the vocal sound and the chorus sound and to regulate a volume of the chorus sound. In this form of the invention, the tone of the vocal or chorus sound, and the chorus output level can be adjusted in reproduction of the song according to the attribute information relating to the music genre, sex of the singer, personal deviation etc. Thus, it is possible to obtain variety of chorus effects suitable for properties such as the music genre, sex of the singer, personal preference etc.
(2) The inventive harmony chorus apparatus includes an effector that imparts an effect including reverberation to the collected vocal sound, a selector that selects either of a harmony mode in which the chorus sound is mixed to the vocal sound and a normal mode in which no chorus sound is mixed to the vocal sound, and a suppressing device that operates when the harmony mode is selected for suppressing the effect which would disturb the created harmony of the song. In this form of the invention, the volume or delay time of the reverberation added to the vocal sound can be suppressed in the harmony mode as compared to the normal mode. Thus, it is possible, in the harmony mode, to avoid excessive reverberation. The comfortable harmonizing sound can be derived.
(3) The inventive harmony chorus apparatus includes a selector that selects either of a harmony mode in which the chorus sound is mixed to the vocal sound and a normal mode in which no chorus sound is mixed to the vocal sound, a detector that detects an end of performance of each song, and a switching device that operates when the end of the performance is detected under the harmony mode for commanding the selector to switch from the harmony mode to the normal mode to thereby restore the normal mode for performance of a next song. In this form of the invention, it is possible to switch the harmony mode to the normal mode automatically at the end of a song played in the harmony mode. Thus, the harmony mode can be automatically switched to the normal mode at the end of the song played in the harmony mode, so that burden on the mode switching operation can be reduced.
(4) The inventive harmony chorus apparatus includes a selector that selects either of a harmony mode in which the chorus sound is mixed to the vocal sound and a normal mode in which no chorus sound is mixed to the vocal sound, and a switching device that operates when the song is performed with a chorus part independently from the vocal sound for commanding the selector to switch to the normal mode, and that operates when the song is performed without a chorus part for commanding the selector to switch to the harmony mode. In this form of the invention, it is possible to switch the reproduction mode automatically so that if the song data contains any chorus part, the vocal sound is reproduced without the chorus sound generation. If the song data contains no chorus part, the vocal sound is added with the chorus sound in the harmony mode. Thus, overlapping of the original chorus part contained in the song data and the chorus sound generated by the apparatus can be avoided.

As described above, the present invention makes it possible to add the chorus melody harmonizing with the main melody of a song so that users can enjoy harmony comfortable and rich in variety. Further, it is possible to add the chorus voice having a tone adjusted for the pitch difference between the vocal sound and chorus sound, so that the harmony can be enriched. Further, the greater the pitch difference between the vocal sound and the chorus sound, the smaller the volume of the chorus sound, so that it is possible to prevent the chorus sound from standing out too much, and thus the harmony can be enriched.

## Claims

1. A harmony chorus apparatus for collecting an original of a vocal sound performed after a main melody pattern of a song, and for adding a chorus sound derived after a chorus melody pattern of the same song to the vocal sound, the apparatus comprising:
a memory that stores a main melody data representative of the main melody pattern and a chorus melody data representative of the chorus melody pattern which is designed in harmony with the main melody pattern;
a pitch difference calculator (31) that sequentially retrieves the main melody data and the chorus melody data from the memory in synchronization with progression of the song, and that calculates a pitch difference between the main melody pattern and the chorus melody pattern according to the retrieved main melody data and the chorus melody data;
a chorus generator (8, 84) that shifts a pitch of the collected vocal sound by the calculated pitch difference to generate the chorus sound in the form of a variation of the vocal sound; and a mixing device (85) that mixes the generated variation of the vocal sound and the collected original of the vocal sound with each other to thereby create a harmony of the song.

2. A harmony chorus apparatus according to claim 1, further comprising a chorus tone controller (82, EQ₁ to EQ_{N}) that varies frequency characteristics of the generated chorus sound according to the calculated pitch difference to thereby improve a tone of the chorus sound.

3. A harmony chorus apparatus according to claim 1, further comprising a chorus volume controller (87, V₁ to V_{N}) that regulates a volume of the generated chorus sound according to the calculated pitch difference so that the volume is made smaller as the pitch difference becomes greater.

4. A harmony chorus apparatus according to claim 1, further comprising an input device (2) that inputs attribute information to characterize performance of the song, and a controller (3) that operates according to the inputted attribute information to modify a tone of either of the vocal sound and the chorus sound and to regulate a volume of the chorus sound.

5. A harmony chorus apparatus according to claim 1, further comprising an effector (86) that imparts an effect including reverberation to the collected vocal sound, a selector (36) that selects either of a harmony mode in which the chorus sound is mixed to the vocal sound and a normal mode in which no chorus sound is mixed to the vocal sound, and a suppressing device (83) that operates when the harmony mode is selected for suppressing the effect which would disturb the created harmony of the song.

6. A harmony chorus apparatus according to claim 1, further comprising a selector (36) that selects either of a harmony mode in which the chorus sound is mixed to the vocal sound and a normal mode in which no chorus sound is mixed to the vocal sound, a detector that detects an end of performance of each song, and a switching device that operates when the end of the performance is detected under the harmony mode for commanding the selector to switch from the harmony mode to the normal mode to thereby restore the normal mode for performance of a next song.

7. A harmony chorus apparatus according to claim 1, further comprising a selector (36) that selects either of a harmony mode in which the chorus sound is mixed to the vocal sound and a normal mode in which no chorus sound is mixed to the vocal sound, and a switching device that operates when the song is performed with a chorus part independently from the vocal sound for commanding the selector (36) to switch to the normal mode, and that operates when the song is performed without a chorus part for commanding the selector (36) to switch to the harmony mode.

8. A harmony chorus apparatus for collecting an original of a vocal sound performed after a main melody pattern of a song, and for adding a chorus sound derived after a chorus melody pattern of the same song to the vocal sound, the apparatus comprising:
a memory that stores chorus melody data representative of the chorus melody pattern which is designed in harmony with the main melody pattern;
a pitch generator (31) that sequentially retrieves the chorus melody data from the memory in synchronization with progression of the song;
a chorus generator (8, 84) that shifts a pitch of the collected vocal sound based on the retrieved chorus melody data to generate the chorus sound in the form of a variation of the vocal sound; and
a mixing device (85) that mixes the generated variation of the vocal sound and the collected original of the vocal sound with each other to thereby create a harmony of the song.

## Patentansprüche

1. Eine Vorrichtung für einen harmonischen Chor zum Sammeln eines Originals eines Vokalklangs, der nach einem Melodiemuster eines Liedes ausgeführt bzw. dargeboten wird, und zum Hinzufügen eines Chorklangs, der nach einem Chormelodiemuster des gleichen Lieds gewonnen wird, zu dem Vokalklang, wobei die Vorrichtung folgendes aufweist:
einen Speicher, der Hauptmelodiedaten, die repräsentativ für das Hauptmelodiemuster sind, und Chormelodiedaten, die repräsentativ für das Chormelodiemuster sind, das in Harmonie mit dem Hauptmelodiemuster entworfen wird, speichert;
ein Tonhöhenunterschiedsberechner (31), der sequentiell die Hauptmelodiedaten und die Chormelodiedaten aus dem Speicher in Synchronisation mit dem Fortschreiten des Liedes holt, und der eine Tonhöhenunterschied zwischen dem Hauptmelodiemuster und dem Chormelodiemuster gemäß den geholten Hauptmelodiedaten und den Chormelodiedaten berechnet;
ein Chorerzeuger (8, 84), der eine Tonhöhe des gesammelten Vokalklangs um den berechneten Tonhöhenunterschied verschiebt, um den Chorklang in Form einer Variation des Vokalklangs zu erzeugen; und
eine Mischeinrichtung (85), die die erzeugte Variation des Vokalklangs und das gesammelte Original des Vokalklangs miteinander mischt, um dadurch eine Harmonie des Liedes zu erzeugen.

2. Eine Vorrichtung für einen harmonischen Chor nach Anspruch 1, die weiterhin eine Chorklangsteuerung (82, EQ₁ bis EQ_{N}) aufweist, die Frequenzcharakteristiken des erzeugten Chorklanges gemäß des berechneten Tonhöhenunterschieds variiert, um dadurch einen Ton des Chorklanges zu verbessern.

3. Eine Vorrichtung für einen harmonischen Chor nach Anspruch 1, die weiterhin eine Chorlautstärkensteuerung (87, V₁ bis V_{N}) aufweist, die eine Lautstärke des erzeugten Chorklanges gemäß dem berechneten Tonhöhenunterschied reguliert, so daß das Volumen kleiner gemacht wird wenn der Tonhöhenunterschied größer wird.

4. Eine Vorrichtung für einen harmonischen Chor nach Anspruch 1, die weiterhin eine Eingabeeinrichtung (2) aufweist, die Eigenschaftsinformationen eingibt, um eine Darbietung bzw. Ausführung des Liedes zu charakterisieren, und eine Steuerung (3), die gemäß der eingegebenen Eigenschaftsinformationen funktioniert, um einen Ton entweder des Vokalklangs oder des Chorklanges zu modifizieren und eine Lautstärke des Chorklanges zu regulieren.

5. Eine Vorrichtung für einen harmonischen Chor nach Anspruch 1, die weiterhin eine Effekteinrichtung (86) aufweist, die einen Effekt ausübt, der das Widerhallen des gesammelten Vokalklangs umfaßt, einen Selektor (36), der entweder aus einem Harmoniemodus auswählt, in dem der Chorklang zu dem Vokalklang gemischt ist, oder einen normalen Modus, in dem kein Chorklang zu dem Vokalklang gemischt ist, und eine Unterdrückungseinrichtung (83), die funktioniert, wenn der Harmoniemodus zum Unterdrücken des Effekts ausgewählt ist, was die erzeugte Harmonie des Liedes stören würde.

6. Eine Vorrichtung für einen harmonischen Chor nach Anspruch 1, die weiter einen Selektor (36) aufweist, der entweder aus einem Harmoniemodus auswählt, in dem der Chorklang zu dem Vokalklang gemischt ist, oder einem normalen Modus, in dem kein Chorklang zu dem Vokalklang gemischt ist, einen Detektor, der ein Ende einer Darbietung eines jeden Lieds abfühlt, und eine Schalteinrichtung, die funktioniert, wenn das Ende der Darbietung bzw. Ausführung unter dem Harmoniemodus abgefühlt wird, um den Selektor anzuweisen, von dem Harmoniemodus auf den normalen Modus umzuschalten, um dadurch den normalen Modus für die Ausführung des nächsten Liedes wiederherzustellen.

7. Eine Vorrichtung für einen harmonischen Chor nach Anspruch 1, die weiter einen Selektor (36) aufweist, der entweder aus einem Harmoniemodus auswählt, in dem der Chorklang zu dem Vokalklang gemischt wird, oder aus einem normalen Modus, in dem kein Chorklang zu dem Vokalklang gemischt wird, sowie eine Schalteinrichtung, die funktioniert, wenn das Lied mit einem von dem Vokalklang unabhängigen Chorteil ausgeübt wird, um den Selektor (36) anzuweisen, zu dem normalen Modus umzuschalten, und die funktioniert, wenn das Lied ohne einen Chorteil ausgeübt wird, um den Selektor (36) anzuweisen, zu dem Harmoniemodus umzuschalten.

8. Eine Vorrichtung für einen harmonischen Chor zum Sammeln eines Originals eines Vokalklangs, der nach einem Hauptmelodiemuster eines Liedes ausgeübt bzw. dargeboten wird, und zum Hinzufügen eines Chorklangs, der nach einem Chormelodiemuster des gleichen Lieds gewonnen wird, zu dem Vokalklang, wobei die Vorrichtung folgendes aufweist:
einen Speicher, der Chormelodiedaten speichert, die repräsentativ für das Chormelodiemuster sind, das in Harmonie mit dem Hauptmelodiemuster gestaltet ist;
einen Tonhöhenerzeuger (31), der sequentiell die Chormelodiedaten aus dem Speicher holt, in Synchronisation mit dem Fortschreiten des Liedes;
einen Chorerzeuger (8, 84), der eine Tonhöhe eines gesammelten Vokalklangs verschiebt, basierend auf den geholten Chormelodiedaten, um den Chorklang in Form einer Variation des Vokalklangs zu erzeugen; und eine Mischeinrichtung (85), die die erzeugte Variation des Vokalklangs und das gesammelte Original des Vokalklangs miteinander mischt, um dadurch eine Harmonie des Liedes zu erzeugen.

## Revendications

1. Appareil de choeur d'harmonie pour recueillir un original d'un son vocal exécuté d'après un motif de mélodie principale d'une chanson, et pour ajouter au son vocal un son de choeur dérivé d'après un motif de mélodie de choeur de la même chanson, l'appareil comprenant :
une mémoire qui enregistre une information de mélodie principale représentative du motif de mélodie principale et une information de mélodie de choeur représentative du motif de mélodie de choeur qui est conçu en harmonie avec le motif de mélodie principale ;
un calculateur de différence de hauteur (31) qui extrait séquentiellement l'information de mélodie principale et l'information de mélodie de choeur de la mémoire en synchronisation avec le déroulement de la chanson, et qui calcule une différence de hauteur entre le motif de mélodie principale et le motif de mélodie de choeur en fonction de l'information extraite de mélodie principale et de mélodie de choeur ;
un générateur de choeur (8, 84) qui transpose une hauteur du son vocal recueilli de la différence de hauteur calculée pour générer le son de choeur sous forme d'une variation du son vocal ; et
un dispositif de mixage (85) qui mixe la variation générée du son vocal et l'original recueilli du son vocal l'un avec l'autre pour créer ainsi une harmonie de la chanson.

2. Appareil de choeur d'harmonie selon la revendication 1, comprenant en outre un contrôleur de sonorité de choeur (82, EQ₁ à EQ_{N}) qui fait varier les caractéristiques de fréquence du son de choeur généré en fonction de la différence de hauteur calculée pour améliorer ainsi la sonorité du son de choeur.

3. Appareil de choeur d'harmonie selon la revendication 1, comprenant en outre un contrôleur de volume de choeur (87, V₁ à V_{N}) qui régule le volume du son de choeur généré en fonction de la différence de hauteur calculée de façon à baisser le volume à mesure que la différence de hauteur augmente.

4. Appareil de choeur d'harmonie selon la revendication 1, comprenant un dispositif d'entrée (2) qui introduit des informations d'attribut pour caractériser l'exécution de la chanson, et un contrôleur (3) tel qu'un égaliseur et un atténuateur qui agit en fonction des informations d'attribut introduites pour modifier une sonorité de l'un ou l'autre du son vocal ou du son de choeur et pour réguler le volume du son de choeur.

5. Appareil de choeur d'harmonie selon la revendication 1, comprenant un dispositif (86) qui applique un effet comprenant de la réverbération au son vocal recueilli, un sélecteur (36) qui sélectionne l'un ou l'autre d'un mode d'harmonie dans lequel le son de choeur est mixé au son vocal et d'un mode normal dans lequel aucun son de choeur n'est mixé au son vocal, et un dispositif de suppression (83) qui fonctionne quand le mode d'harmonie est sélectionné pour supprimer tout effet qui dérangerait l'harmonie créée de la chanson.

6. Appareil de choeur d'harmonie selon la revendication 1, comprenant en outre un sélecteur (36) qui sélectionne l'un ou l'autre d'un mode d'harmonie dans lequel le son de choeur est mixé au son vocal et d'un mode normal dans lequel aucun son de choeur n'est mixé au son vocal, un détecteur qui détecte une fin d'exécution de chaque chanson et un dispositif de commutation qui fonctionne quand la fin de l'exécution est détectée en mode d'harmonie pour commander au sélecteur de commuter du mode d'harmonie au mode normal pour restaurer ainsi le mode normal pour l'exécution de la chanson suivante.

7. Appareil de choeur d'harmonie selon la revendication 1, comprenant en outre un sélecteur (36) qui sélectionne l'un ou l'autre d'un mode d'harmonie dans lequel le son de choeur est mixé au son vocal et d'un mode normal dans lequel aucun son de choeur n'est mixé au son vocal, et un dispositif de commutation qui fonctionne quand la chanson est exécutée avec une partie de choeur indépendamment du son vocal pour commander la commutation du sélecteur (36) vers le mode normal, et qui fonctionne lors de l'exécution de la chanson sans partie de choeur pour commander la commutation du sélecteur (36) vers le mode d'harmonie.

8. Appareil de choeur d'harmonie pour recueillir un original d'un son vocal exécuté d'après un motif de mélodie principale d'une chanson, et pour ajouter un son de choeur dérivé d'après un motif de mélodie de choeur de la même chanson au son vocal, l'appareil comprenant :
une mémoire qui enregistre une information de mélodie principale représentative du motif de mélodie principale et une information de mélodie de choeur représentative du motif de mélodie de choeur qui est conçu en harmonie avec le motif de mélodie principale ;
un générateur de hauteur (31) qui extrait séquentiellement l'information de mélodie de choeur de la mémoire en synchronisation avec le déroulement de la chanson,
un générateur de choeur (8, 84) qui transpose une hauteur du son vocal recueilli sur la base des données de mélodie de choeur extraites pour générer le son de choeur sous forme d'une variation du son vocal, et
un dispositif de mixage (85) qui mixe la variation générée du son vocal et l'original recueilli du son vocal l'un avec l'autre pour créer ainsi une harmonie de la chanson.
